# EUROPÄISCHE PATENTSCHRIFT

(11) **EP 3 255 103 B1**
(45) Veröffentlichungstag und Bekanntmachung des Hinweises auf die Patenterteilung: **26.12.2018**
(21) Anmeldenummer: 17172679.7
(22) Anmeldetag: 24.05.2017
(51) Int. Cl.: C08L 63/00

(54) **ZUSAMMENSETZUNG ENTHALTEND EIN POLYMER AUF DER BASIS VON EPOXIDVERBINDUNGEN**
COMPOSITION CONTAINING A POLYMER BASED ON EPOXY COMPOUNDS
COMPOSITION CONTENANT UN POLYMÈRE À BASE DE COMPOSÉS ÉPOXYDES

(30) Priorität: 08.06.2016 DE 102016006910
(43) Veröffentlichungstag der Anmeldung: 13.12.2017
(73) Patentinhaber: Hexion GmbH, 58642 Iserlohn-Letmathe (DE)
(72) Erfinder: Kuhlmann, Gunda, 59077 Hamm (DE); Scheuer, Christoph, 46539 Dinslaken (DE); Saltapidas, Panagiotis, 45711 Datteln (DE); Dreßen, Thomas, 56049 Oberhausen (DE)

(56) Entgegenhaltungen:
- EP-B1- 2 352 793
- US-A- 4 663 413
- US-A- 5 284 938
- KONCZOL L ET AL: "ULTIMATE PROPERTIES OF EPOXY RESINS MODIFIED WITH A POLYSILOXANE- POLYCAPROLACTONE BLOCK COPOLYMER", JOURNAL OF APPLIED POLYMER SCIENCE, JOHN WILEY & SONS, INC, US, Bd. 54, Nr. 6, 7. November 1994 (1994-11-07), Seiten 815-826, XP000475870, ISSN: 0021-8995, DOI: 10.1002/APP.1994.070540612

## Beschreibung

Die Erfindung betrifft eine Zusammensetzung eines Polymers auf der Basis von Epoxidverbindungen enthaltend, ein Verfahren zur Herstellung dieser und deren Verwendung.

Polymere auf der Basis von Epoxidverbindungen sind meist Umsetzungsprodukte von mehrfunktionellen Hydroxylverbindungen mit Epichlorhydrin. Die Vernetzung der Polymermatrix erfolgt durch Polyaddition über die Epoxidgruppen mit entsprechenden Härtern. Sie werden für verschiedenartige Anwendungen eingesetzt. So werden sie z.B. als Gießharze (Reaktionsharze), Formmassen (Reaktionsharzmassen) oder als Prepregs verarbeitet.

Als Gießharze finden sie einen breiten Anwendungsbereich in der Elektrotechnik z.B. zum Herstellen von Bauteilen für Elektromotoren, Hochspannungsdurchführungen, Isolatoren oder Kondensatoren oder auch im Bauwesen als Lacke für Oberflächenschutz und Beschichtungen, Verklebung von Betonbauelementen oder als hochfeste, chemikalienbeständige Beläge. Gießharze auf der Basis von Epoxidharzen werden aber auch als Klebstoffe oder im Werkzeugbau verwendet.

Formmassen aus Epoxidharzen finden insbesondere in der Elektrotechnik z.B. zum Ummanteln von empfindlichen elektrotechnischen und elektronischen Bauteilen wie Kondensatoren, Kollektoren oder Widerständen Anwendung.

Laminate auf Basis von Epoxidharzen werden u.a. für Verkleidungen und Bauelemente von Flugzeugen, Rotorblättern für Windkraftanlagen, Bootskörper, als Basismaterial für gedruckte Schaltungen und Leiterplatten eingesetzt. Auch haben sie ihre Anwendung in der Sport- und Freizeitbranche als z.B. Ski, Hockeyschläger, Tennisschläger, Angelruten oder Hochsprungstäbe gefunden.

Der breite Anwendungsbereich der gehärteten Epoxidharze beruht auf ihren hervorragenden Eigenschaften hinsichtlich z.B. ihrer guten elektrischen Isoliereigenschaften, hohen Festigkeiten, niedrigen Schwindung, guten chemischen Beständigkeit und ihrer schweren Entzündbarkeit.

Da die Anforderungen an die Produkte in den einzelnen Anwendungsgebieten stetig steigen, werden auch immer höhere Anforderungen an die Ausgangsmaterialien, also an die gehärteten Epoxidharze gestellt.

So beschreibt die EP 2 352 793 B1 die Verwendung von dispergierbaren Polyorganosiloxantropfen und siloxanhaltigen Blockcopolymer zur Modifizierung unter anderem auch von Epoxidharzen zur Erhöhung der Schlagfestigkeit und Schlagzähigkeit. Allerdings wurde festgestellt, dass mit einer solchen Zusammensetzung die Bruchzähigkeit nicht auf das gewünschte Niveau erhöht werden konnte. Ähnliche Zusammensetzungen sind in der US 4,663,413 und US 5,037,898 beschrieben.

Es ist nunmehr Aufgabe der hier vorliegenden Erfindung, die Bruchzähigkeit von gehärteten Epoxidharzen zu verbessern, um den heutigen Anforderungen an Epoxidharz-Werkstoffen stand halten zu können.

Gelöst wird diese Aufgabe erfindungsgemäß durch eine Zusammensetzung folgende Komponenten a), b) und c) enthaltend:
a)
   - 75 bis 99,5 Gew.% eines Polymers auf der Basis von Epoxidverbindungen,
   - 0,5 bis 25 Gew.% zumindest eines mehrwertigen Alkohols und
   - gegebenenfalls Zusatzstoffen
b)
   - 80 bis 99 Gew.% eines Härters, der geeignet ist, das Polymer auf der Basis von Epoxidverbindungen zu härten,
   - 1 bis 20 Gew.% eines Polycaprolacton-Polysiloxan-Blockcopolymers,
   - gegebenenfalls einen Beschleuniger und
   - gegebenenfalls Zusatzstoffen und
c)
   - gegebenenfalls einen Beschleuniger.

Polymere auf der Basis von Epoxidverbindungen können ausgewählt sein aus der Gruppe der Polyepoxide auf der Basis von cycloaliphatischen oder aliphatischen Verbindungen, auf der Basis von Bisphenol A und/oder F und daraus hergestellten Advancementharzen, auf der Basis von Tetraglycidylmethylendianilin (TGMDA), auf der Basis von epoxidierten halogenierten Bisphenolen und/oder epoxidierten Novolaken und/oder Polyepoxidestern auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol, auf der Basis von epoxidierten Flourenonbisphenolen.

So können als Polymer auf der Basis von Epoxidverbindungen epoxidierte Phenolnovolake (Kondensationsprodukt aus Phenol und z. B. Formaldehyd und/oder Glyoxal), epoxidierte Kresolnovolake, Polyepoxide auf der Basis von Bisphenol-A (z. B. auch Produkt aus Bisphenol A und Tetraglycidylmethylendianilin), epoxidierte halogenierte Bisphenole (z. B. Polyepoxide auf der Basis von Tetrabrombisphenol-A) und/oder Polyepoxide auf der Basis von Bisphenol-F und/oder epoxidierter Novolak und/oder Epoxidharze auf der Basis von Triglycidylisocyanurate verwendet. Hierzu zählen u.a.:
Epikote® 1001, Epikote® 1004, Epikote® 1007, Epikote® 1009: Polyepoxide auf Basis von Bisphenol A
Epon® SU8 (epoxidierter Bisphenol-A Novolak), Epon® 1031 (epoxidierter Glyoxal-Phenol Novolak), Epon® 1163 (Polyepoxid auf Basis Tetrabrombisphenol-A), Epikote® 03243/LV (Polyepoxid auf Basis von (3,4-Epoxycyclohexyl)methyl 3,4-epoxycyclohexylcarboxylate und Bisphenol-A), Epon® 164 (epoxidierter o-Kresolnovolak) - alle Produkte erhältlich bei Hexion Inc.

In der Komponente a) sind bezogen auf alle Bestandteile der Komponente a) 75 bis 99,5 Gew.% des Polymers auf der Basis von Epoxidverbindungen enthalten. Besonders bevorzugt ist eine Menge von 95 bis 99,5 Gew.%, da geringere Mengen zu einer in der Regel weniger erwünschten Verringerung der Glasübergangstemperatur führen. Als weiterer Bestandteil der Komponente a) sind bezogen auf alle Bestandteile der Komponente a) 0,5 bis 25 Gew.% zumindest eines mehrwertigen Alkohols enthalten. Vorteilhaft ist, wenn der mehrwertige Alkohol ein in einer Menge von 0,5 bis 3 Gew.% in der Komponente a) vorhanden ist, da in diesem Konzentrationsbereich ein ausgewogenes Verhältnis zwischen der Verbesserung der Bruchzähigkeit und einer akzeptablen Glasübergangstemperatur erreicht wird. Bevorzugt sind Glykole (zweiwertige Alkohole (Diole)), die sich vom Ethylenglykol ableiten lassen, wie z.B. Ethylenglykol, Propylenglykol, Methylglykol, Trimethylenglykol, Neopentylglykol, Diethylenglykol, Triethylenglykol, Polyethylenglykol und/oder Polypropylenglykol. Besonders bevorzugt ist die Verwendung von Polypropylenglykol, da diese Verbindung marktüblich und damit leicht zugänglich ist.

Des Weiteren können aber auch dreiwertige oder höher wertige Alkohole eingesetzt werden wie z.B. Glycerine, Trimethylolpropan, Glucose und/oder andere Zuckerverbindungen.

Weiterhin kann die Komponente a) gegebenenfalls Zusatzstoffe, wie Verarbeitungshilfsmittel (Entschäumer, Entlüfter), Pigmente und/oder UV-Stabilisierungsmittel enthalten, die handelsüblich sind.

Wesentlicher Bestandteil der Komponente b) ist ein Härter in der Konzentration von 80 bis 99 Gew.% (bezogen auf alle Bestandteile der Komponente b) der geeignet ist, das Polymer auf der Basis von Epoxidverbindungen zu härten. Besonders bevorzugt ist eine Menge von 90-99 Gew.%, da dadurch die Viskosität der Komponente b) optimal beeinflusst wird
Die Menge der Härterkomponente in der Mischung richtet sich üblicherweise nach dem Epoxidäquivalent (Harzmenge in Gramm, die 1 Mol Epoxidgruppe enthält) des verwendeten Epoxidharzes und des verwendeten Härters.

Als Härter für die Epoxidharze kommen z.B. Phenole, Imidazole, Thiole, Imidazolkomplexe, Carbonsäuren, Bortrihalogenide, Novolake, Melamin-Formaldehyd-Harze in Betracht. Besonders bevorzugt sind Anhydridhärter vorzugsweise Dicarbonsäureanhydride und Tetracarbonsäureanhydride bzw. deren Modifizierungen. Als Beispiele seien an dieser Stelle folgende Anhydride genannt: Tetrahydrophthalsäureanhydrid (THPA), Hexahydrophthalsäureanhydrid (HHPA), Methyltetrahydrophthalsäureanhydrid (MTHPA), Methylhexahydrophthalsäureanhydrid (MHHPA), Methyl-nadic-anhydrid (MNA), Dodezenylbernsteinsäureanhydrid (DBA) oder Gemische hiervon. Als modifizierte Dicarbonsäureanhydride kommen saure Ester (Reaktionsprodukte aus oben genannten Anhydriden oder deren Gemische mit Diolen oder Polyolen z.B.: Neopentylglykol (NPG), Polypropylenglykol (PPG, bevorzugt Molekulargewicht 200 bis 1000) zum Einsatz.

Weiterhin bevorzugt sind Härter, die ausgewählt sind aus der Gruppe der Aminhärter, wiederum hiervon ausgewählt aus den Polyaminen (aliphatisch, cyloaliphatisch oder aromatisch), Polyamiden, Mannich Basen, Polyaminoimidazolin, Polyetheraminen und Mischungen hieraus. Beispielhaft sei an dieser Stelle die Polyetheramine, z. B. Jeffamine D230, D400 (Fa. Huntsman Advance Materials LLC.) genannt, bei deren Einsatz sich die Härtung durch eine geringe Exothermie auszeichnet. Polyamine z. B. Isophorondiamin verleihen der Zusammensetzung einen hohen T_{G}-Wert und die Mannich Basen, z.B. Epikure 110 (Hexion Inc.) zeichnen sich durch eine geringe Carbamat Bildung und eine hohe Reaktivität aus.
Weiterhin enthält die Komponente b) der erfindungsgemäßen Zusammensetzung bezogen auf alle Bestandteile der Komponente b) 1 bis 20 Gew.% eines Polycaprolacton-Polysiloxan-Blockcopolymers, wobei Mengen 1 bis 10 Gew.% besonders vorteilhaft sind, um die gewünschte Effizienz der Mischung bei geeigneter Viskosität zu erzielen. Konzentrationen größer 20 Gew. % führen zu einer signifikanten Erhöhung der Verabeitungsviskosität. Dieses Blockcopolymer ist aus dem Stand der Technik bekannt. So sind u.a. entsprechende Blockcolymere in der US 4,663,413 oder EP 2 352 793 B1 beschrieben. Die zu verwendenden Blockcopolymere A"-B - Anweisen folgende Struktur auf:

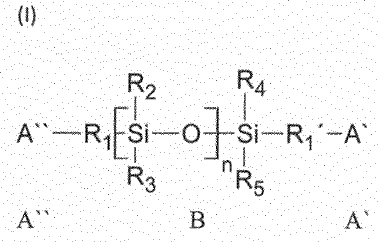

Das lineare Blockcopolymer A"- B - A' besteht aus einem Organosiloxan-Block B und einem Polylacton-Block A" bzw. A'.

n: ganze Zahl zwischen 1-200
R₂, R₃, R_{4.} R₅: gleich oder unabhängig voneinander ausgewählt aus linearen oder verzweigten Alkyl-, Alkenyl-, Haloalkyl-, Haloalkenylgruppen mit bis zu 6 Kohlenstoffatomen; Arylgruppen mit 5-7 Kohlenstoffatomen oder Aralkylgruppen mit 6-8 Kohlenstoffatomen.
R₁', R₁: gleich oder unabhängig voneinander ausgewählt aus Alkylether oder Alkylamine mit bis zu 7 Kohlenstoffatomen.
A" und A', gleich oder unabhängig voneinander mit 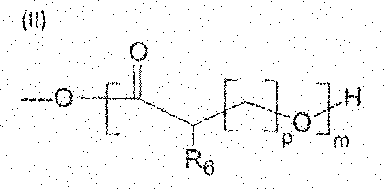 wobei
p: eine ganze Zahl von 1-6,
m: eine ganze Zahl von 1-25,
R₆: Wasserstoff oder lineare oder verzweigte Alkylgruppen mit bis zu 6 Kohlenstoffatomen

Beispielhaft sei an dieser Stelle folgende Verbindung mit n ≥ 1 und y > 3 genannt:

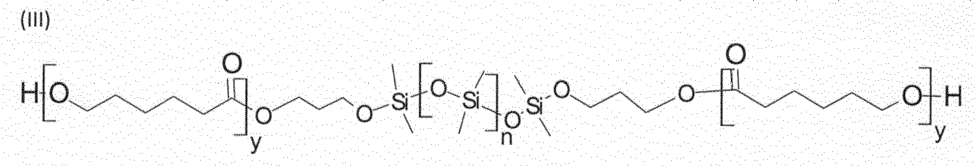

Als weiteren Bestandteil der Komponente b) kann diese gegebenenfalls einen Beschleuniger in üblichen Mengen (z.B. 1-2 Gew.%) enthalten, wobei prinzipiell alle aus dem Stand der Technik bekannten Beschleuniger, die für entsprechende Epoxidharze verwendet werden können, geeignet sind.
Beispielhaft seien hier genannt, z. B. Imidazole, substituierte Imidazole, Imidazoladdukte, Imidazolkomplexe (z. B. Ni-Imidazolkomplex), tertiäre Amine, quaternäre Ammonium- und/oder Phosphoniumverbindungen, Zinn(IV)chlorid, Dicyandiamid, Salicylsäure, Harnstoff, Harnstoffderivate, Bortrifluridkomplexe, Bortrichloridkomplexe, Epoxiadditions-Reaktionsprodukte, Tetraphenylenborkomplexe, Aminborate, Amintitanate, Metallacetylacetonate, Naphthensäuremetallsalze, Octansäuremetallsalze, Zinnoctoate, weitere Metallsalze und/oder Metallchelate, zum Einsatz. Weiterhin können z.B. oligomere Polyethylenpiperazine, Dimethylaminopropyldipropanolamin, Bis-(dimethylaminopropyl)-amino-2-propanol, N,N'-Bis-(3-dimethylaminopropyl)urea, Mischungen aus N-(2-hydroxypropyl)imidazol, Dimethyl-2-(2-aminoethoxy)ethanol und Mischungen hiervon, Bis (2-dimethylaminoethyl)ether, Pentamethyldiethylentriamin, Dimorpholinodiethylether, 1,8 Diazabicyclo[5.4.0]undecen-7, N-Methylimidazol, 1,2 Dimethylimidazol, Triethylendiamin und/oder 1,1,3,3-Tetramethylguanidin.

Die genannten Beschleuniger können zur Komponente b) und/oder separat als Komponente c) zugegeben werden. Es kann aber auch vollständig auf die Zugabe verzichtet werden.

Wiederum können ebenfalls als Bestandteil der Komponente b) gegebenenfalls Zusatzstoffe, wie Verarbeitungshilfsmittel, Pigmente und/oder UV-Stabilisierungsmittel, die handelsüblich sind, zugegeben werden.

Durch die Aufteilung der einzelnen Bestandteile in die Komponenten, insbesondere in die Komponenten a) und b), wird die Löslichkeit des Blockcopolymeren im Härter ausgenutzt, wodurch die Lagerstabilität der Zusammensetzung erhöht wird. Wurde das Blockcopolymer in dem Epoxidharz dispergiert, ist die Lagerstabilität geringer und es wurde eine Kristallisationsneigung beobachtet.

Das Verhältnis der Komponenten a) und b) wird in Abhängigkeit vom Epoxidäquivalent des Harzes und der Äquivalenzmasse des verwendeten Härters bestimmt. So werden beispielsweise bei der Verwendung eines Anhydridhärters bevorzugt 70 bis 100 Teile Komponente b) auf 100 Teile Komponente a) zugemischt. Wird ein Aminhärter eingesetzt, ändert sich das Verhältnis von bevorzugt 10 bis 30 Teile Komponente b) auf 100 Teile Komponente a).

Die Herstellung der gehärteten erfindungsgemäßen Zusammensetzung erfolgt nach dem Verfahren folgende Schritte enthaltend:
- Herstellung der Komponenten a) und b)
- Mischen der Komponenten a) und b) und gegebenenfalls c) bei bis zu 120 °C
- gegebenenfalls Formgebung der hergestellten Mischung und
- Aushärtung der Mischung bei Temperaturen bis zu 180 °C.

Die Herstellung der Komponenten a) und b) erfolgt in üblichen Mischaggregaten, wie innenmischer oder Extruder in der Regel bei Raumtemperatur. Die Komponenten a) und b) sind lagerstabil und können bedarfsgerecht eingesetzt werden. Das Mischen der Komponenten a) und b) erfolgt ebenfalls in üblichen Aggregaten, wobei es bevorzugt ist, im Anschluss an die Herstellung der Komponenten a) und b) diese miteinander in dem bereits für die Herstellung der Komponenten a) oder b) genutzten Mischaggregat zu vermengen, wobei die Reihenfolge keine Rolle spielt. Das Mischen kann in einem Temperaturbereich von Raumtemperatur bis 120 °C gegebenenfalls unter Vakuum erfolgen. Das Verhältnis der Komponenten a) und b) wird wiederum in der Regel bestimmt vom Epoxidäquivalent des Harzes und des verwendeten Härters. So werden beispielsweise bei der Verwendung eines Anhydridhärters bevorzugt 70 bis 100 Teile Komponente b) auf 100 Teile Komponente a) zugemischt. Wird ein Aminhärter eingesetzt, ändert sich das Verhältnis von bevorzugt 10 bis 30 Teile Komponente b) auf 100 Teile Komponente a). Je nachdem für welche Anwendung die erfindungsgemäße Zusammensetzung eingesetzt werden soll, kann eine entsprechende Formgebung der hergestellten Mischung erfolgen. Anschließend erfolgt die Aushärtung bei Temperaturen, die wiederum in Abhängigkeit des verwendeten Härters, zwischen Raumtemperatur (z. B. Amine) und 90-180 °C (z.B. Anhydride) liegen können.

Die erfindungsgemäße Zusammensetzung wird im gehärteten Zustand vorzugsweise für die Herstellung von Gießharzen, Komposit-Zusammensetzungen, Beschichtungen, Klebstoffen und Formmassen verwendet.

Anhand des folgenden Ausführungsbeispiels soll die Erfindung näher erläutert werden.

**Tabelle 1**

| Bestandteil | Stand der Technik (1) | **Erfindung (2)** | Zusammensetzung gemäß EP 2 352 793 B1 (3) |
|---|---|---|---|
| Epikote® 861 | 100 | 100 | 100 |
| Polypropylenglykol | ----- | 1,5 | ---- |
| Epikure® 871 | 95 | 95 | 95 |
| Polycaprolacton-Polysiloxan-Blockcopolymer GENIOPERL® W35 Fa Wacker | 6 | 6 | 6 |
| Polydimethoxysiloxan | ------ | ------ | 1,5 |
| Quarzmehl | 391 | 393 | 393 |

### Herstellung der Komponente a) der erfindungsgemäßen Zusammensetzung (2):

Zu 100 Gewichtsteilen des Epoxidharzes Epikote® 861 werden bei Raumtemperatur (23 °C) 1,5 Gewichtsteile Polypropylenglykol gegeben und für ca. 0,5 Stunden homogenisiert. Anschließend erfolgt die Zugabe des Quarzmehls.

### Herstellung der Komponente b) der erfindungsgemäßen Zusammensetzung (2):

In 95 Gewichtsteilen des Anhydridhärters Epikure® 871 werden bei ca. 70 - 80°C für 1-2 Stunden 6 Gewichtsteile Genioperl® W35 unter Rühren gelöst. Nachdem das Genioperl® W35 vollständig gelöst ist, wird die Lösung auf Raumtemperatur (23°C) abgekühlt.

Die Komponenten a) und b) werden bei Raumtemperatur miteinander vermischt und bei 160 ° C ausgehärtet. Aus dieser gehärteten Zusammensetzung wurden Probekörper zur Bestimmung der Bruchzähigkeit zugeschnitten (Tabelle 2).

Die Herstellung der Vergleichszusammensetzungen (1) und (3) aus Tabelle 1 erfolgte in einem Schritt bei Raumtemperatur und die Härtung bei 160 °C. Aus den gehärteten Zusammensetzungen wurden Probekörper zur Bestimmung der Bruchzähigkeit zugeschnitten (Tabelle 2).

**Tabelle 2**

| Eigenschaft der gehärteten Proben | Stand der Technik (1) | **Erfindung (2)** | Zusammensetzung gemäß EP 2 352 793 B1 (3) |
|---|---|---|---|
| T_{G} [°C] | 115 | 110 | 110 |
| Bruchzähigkeit [J/m²] | 640 | 840 | 770 |

Die Bestimmung der Bruchzähigkeit erfolgte mit einer Zug-Druck-Maschine der Klasse 1 nach DIN 51221. Dabei wurde der vom Prüfkörper erzeugte Widerstand während der Belastung über den Verlauf der Prüfung registriert. Als Prüfkörper wurden ebene Platten (80 mm x 34 mm x 4 mm) verwendet, die mit einer V-Kerbe (60 °C spitz zulaufend, Kerbradius max. 0,05 mm) versehen wurden. Die Prüfkörper wurden so auf die Prüfvorrichtung gelegt, dass die Kerbe nach unten auflageseitig zeigte. Über zwei Stempelkugeln erfolgte die Krafteinleitung mit einer Geschwindigkeit von 0,05 mm/min gleichmäßig beidseitig der Kerbe. Es wurde eine Dreifachbestimmung unter Normalklima DIN 50-014-23/50-2 durchgeführt. Die Prüfung ist beendet, wenn der Prüfkörper in zwei Hälften zerbricht bzw. wenn der Lastabfall 99 % der Maximallast beträgt. Die Bruchzähigkeit wurde entsprechend berechnet.

Es konnte nachgewiesen werden, dass die alleinige Verwendung eines Polycaproiacton-Polysiloxan-Blockcopolymers (I) nicht zu einer ausreichenden Erhöhung der Bruchzähigkeit führte. Durch die Verwendung einer zusätzlichen Siloxanverbindung (III) wurde die Bruchzähigkeit im Vergleich zum Stand der Technik (1) zwar verbessert, jedoch noch nicht in dem gewünschten Maße angehoben. Erfindungsgemäß konnte jedoch durch die gekonnte Aufteilung in die Komponenten a) und b) und durch die Verwendung von geringen Mengen an Polypropylenglykol in Kombination mit dem Blockcopolymer die Bruchzähigkeit auf das gewünschte höhere Niveau gebracht werden ohne dass eine Verschlechterung des T_{G}s auftrat.

## Patentansprüche

1. Zusammensetzung folgende Komponenten a), b) und c) enthaltend:
a)
- 75 bis 99,5 Gew.% eines Polymers auf der Basis von Epoxidverbindungen,
- 0,5 bis 25 Gew.% zumindest eines mehrwertigen Alkohols und
- gegebenenfalls Zusatzstoffen
b)
- 80 bis 99 Gew.% eines Härters, der geeignet ist, das Polymer auf der Basis von Epoxidverbindungen zu härten,
- 1 bis 20 Gew.% eines Polycaprolacton-Polysiloxan-Blockcopolymers,
- gegebenenfalls einen Beschleuniger und
- gegebenenfalls Zusatzstoffen und
c)
- gegebenenfalls einen Beschleuniger.

2. Zusammensetzung nach Anspruch 1, **dadurch gekennzeichnet, dass** das Verhältnis der Komponenten a) und b) in Abhängigkeit vom Epoxidäquivalent des Harzes und der Äquivalenzmasse des verwendeten Härters bestimmt wird.

3. Zusammensetzung nach Anspruch 1, **dadurch gekennzeichnet, dass** das Polymer auf der Basis von Epoxidverbindungen ausgewählt ist aus der Gruppe der Polyepoxide auf der Basis von cycloaliphatischen oder aliphatischen Verbindungen, auf der Basis von Bisphenol A und/oder F und daraus hergestellten Advancementharzen, auf der Basis von Tetraglycidylmethylendianilin (TGMDA), auf der Basis von epoxidierten halogenierten Bisphenolen und/oder epoxidierten Novolaken und/oder Polyepoxidestern auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol, auf der Basis von epoxidierten Flourenonbisphenolen.

4. Zusammensetzung nach Anspruch 1, **dadurch gekennzeichnet, dass** der mehrwertige Alkohol ausgewählt ist aus Glykolen, insbesondere Ethylenglykol, Propylenglykol und/oder Polypropylenglykol, Glycerinen und/oder Zuckerverbindungen.

5. Zusammensetzung nach Anspruch 1, **dadurch gekennzeichnet, dass** der Härter ein Anhydrid, insbesondere Tetrahydrophthalsäureanhydrid (THPA), Hexahydrophthalsäureanhydrid (HHPA), Methyltetrahydrophthalsäureanhydrid (MTHPA), Methylhexahydrophthalsäureanhydrid (MHHPA), Methylnadicanhydrid (MNA), Dodezenylbernsteinsäureanhydrid (DBA) oder Gemische hiervon ist.

6. Zusammensetzung nach Anspruch 1, **dadurch gekennzeichnet, dass** der Härter ein Amin, insbesondere ein Polyamin, Polyamid, Mannich-Base, Polyaminoimidazolin, Polyetheramin und Mischungen hieraus ist.

7. Zusammensetzung nach Anspruch 1, **dadurch gekennzeichnet, dass** das Polycaprolacton-Polysiloxan-Blockcopolymer folgende Struktur aufweist 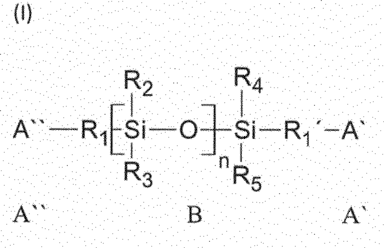
n: ganze Zahl zwischen 1-200
R₂, R₃, R₄, R₅: gleich oder unabhängig voneinander ausgewählt aus linearen oder verzweigten Alkyl-, Alkenyl-, Haloalkyl-, Haloalkenylgruppen mit bis zu 6 Kohlenstoffatomen; Arylgruppen mit 5-7 Kohlenstoffatomen oder Aralkylgruppen mit 6-8 Kohlenstoffatomen.
R₁', R₁: gleich oder unabhängig voneinander ausgewählt aus Alkylether oder Alkylamine mit bis zu 7 Kohlenstoffatomen.
A" und A': gleich oder unabhängig voneinander mit 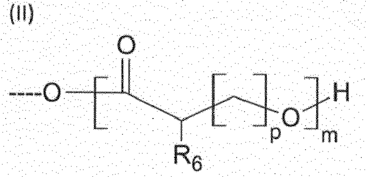 wobei
p: eine ganze Zahl von 1-6,
m: eine ganze Zahl von 1-25,
R₆: Wasserstoff oder lineare oder verzweigte Alkylgruppen mit bis zu 6 Kohlenstoffatomen

8. Zusammensetzung nach Anspruch 7, **dadurch gekennzeichnet, dass** das Polycaprolacton-Polysiloxan-Blockcopolymer folgende Struktur aufweist: 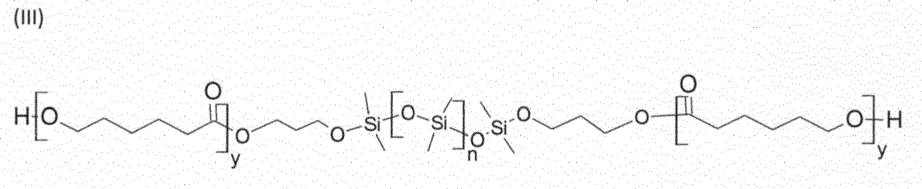 mit n ≥ 1 und y>3.

9. Verfahren zur Herstellung einer gehärteten Zusammensetzung folgende Schritte enthaltend:
- Herstellung der Komponenten a) und b) nach Anspruch 1
- Mischen der Komponenten a) und b) und gegebenenfalls c) nach Anspruch 1 bei Temperaturen bis zu 120 °C
- gegebenenfalls Formgebung der hergestellten Mischung und
- Aushärtung der Mischung bei Temperaturen bis zu 180 °C.

10. Gehärtete Zusammensetzung die Komponenten des Anspruchs 1 enthaltend für die Herstellung von Gießharzen, Komposit-Zusammensetzungen, Beschichtungen, Klebstoffen und Formmassen.

## Claims

1. Composition comprising the following components a), b) and c) :
a)
- from 75 to 99.5% by weight of a polymer based on epoxide compounds,
- from 0.5 to 25% by weight of at least one polyhydric alcohol and
- optionally additives,
b)
- from 80 to 99% by weight of a curing agent which is suitable for curing the polymer based on epoxide compounds,
- from 1 to 20% by weight of a polycaprolactone-polysiloxane block copolymer,
- optionally an accelerator and
- optionally additives, and
c)
- optionally an accelerator.

2. Composition according to Claim 1, **characterized in that** the ratio of components a) and b) is determined in dependence on the epoxide equivalent of the resin and the equivalent mass of the curing agent used.

3. Composition according to Claim 1, **characterized in that** the polymer based on epoxide compounds is selected from the group of the polyepoxides based on cycloaliphatic or aliphatic compounds, based on bisphenol A and/or F and advancement resins produced therefrom, based on tetraglycidylmethylenedianiline (TGMDA), based on epoxidized halogenated bisphenols and/or epoxidized novolaks and/or polyepoxide esters based on phthalic acid, hexahydrophthalic acid or based on terephthalic acid, epoxidized o- or p-aminophenols, epoxidized polyaddition products of dicyclopentadiene and phenol, based on epoxidized flourenone bisphenols.

4. Composition according to Claim 1, **characterized in that** the polyhydric alcohol is selected from glycols, in particular ethylene glycol, propylene glycol and/or polypropylene glycol, glycerols and/or sugar compounds.

5. Composition according to Claim 1, **characterized in that** the curing agent is an anhydride, in particular tetrahydrophthalic anhydride (THPA), hexahydrophthalic anhydride (HHPA), methyltetrahydrophthalic anhydride (MTHPA), methylhexahydrophthalic anhydride (MHHPA), methylnadic anhydride (MNA), dodecenylsuccinic anhydride (DBA) or mixtures thereof.

6. Composition according to Claim 1, **characterized in that** the curing agent is an amine, in particular a polyamine, polyamide, Mannich base, polyaminoimidazoline, polyetheramine and mixtures thereof.

7. Composition according to Claim 1, **characterized in that** the polycaprolactone-polysiloxane block copolymer has the following structure 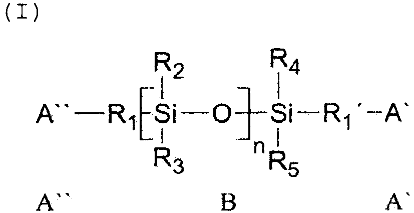
n: integer between 1 and 200,
R₂, R₃, R₄, R₅: identical or independently of one another selected from linear or branched alkyl, alkenyl, haloalkyl, haloalkenyl groups having up to 6 carbon atoms; aryl groups having from 5 to 7 carbon atoms or aralkyl groups having from 6 to 8 carbon atoms,
R₁', R₁: identical or independently of one another selected from alkyl ethers or alkylamines having up to 7 carbon atoms,
A" and A': identical or independently of one another with 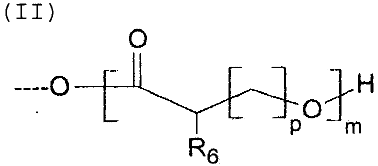 wherein
p: an integer from 1 to 6,
m: an integer from 1 to 25,
R₆: hydrogen or linear or branched alkyl groups having up to 6 carbon atoms.

8. Composition according to Claim 7, **characterized in that** the polycaprolactone-polysiloxane block copolymer has the following structure: 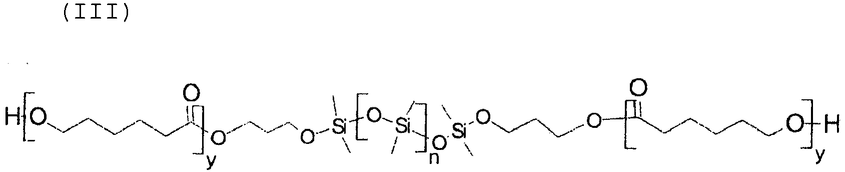 wherein n ≥ 1 and y > 3.

9. Process for the preparation of a cured composition, comprising the following steps:
- preparing components a) and b) according to Claim 1,
- mixing components a) and b) and optionally c) according to Claim 1 at temperatures up to 120°C,
- optionally shaping the mixture that is produced, and
- curing the mixture at temperatures up to 180°C.

10. Cured composition comprising the components of Claim 1 for the production of casting resins, composite compositions, coatings, adhesives and molding compositions.

## Revendications

1. Composition comprenant :des composants suivants : a), b) et c)
a)
- de 75 à 99,5% en poids d'un polymère à base de composés époxy,
- de 0,5 à 25% en poids d'au moins un alcool polyhydrique et
- éventuellement des additifs
b)
- de 80 à 99% en poids d'un agent durcisseur qui convient au durcissement du polymère à base de composés époxy,
- de 1 à 20% en poids d'un copolymère séquencé polycaprolactone-polysiloxane,
- éventuellement un accélérateur et
- éventuellement des additifs, et
c)
- si nécessaire, un accélérateur.

2. Composition selon la revendication 1, **caractérisée en ce que** le rapport des composants a) et b) est déterminé en fonction de l'équivalent époxy de la résine et de la masse équivalente du durcisseur utilisé.

3. Composition selon la revendication 1, **caractérisée en ce que** le polymère à base de composés époxy est choisi dans le groupe des polyépoxydes à base de composés cycloaliphatiques ou aliphatiques, à base de bisphénol A et / ou de F et des résines d'avancement préparées à partir de ceux-ci, de tétraglycidylméthylènedianiline (TGMDA), à base de bisphénols halogénés époxydés et / ou de novolaques époxydées et / ou d'esters polyépoxydes à base d'acide phtalique, d'acide hexahydrophtalique ou à base d'acide téréphtalique, o- ou p-aminophénols epoxidés, des produits de polyaddition de dicyclopentadiène époxidés et un phénol, à base de fluorènebisphénols époxydés.

4. Composition selon la revendication 1, **caractérisée en ce que** l'alcool polyhydrique est choisi parmi les glycols, en particulier l'éthylène glycol, le propylène glycol et / ou le polypropylène glycol, les glycérols et / ou des composés de sucres.

5. Composition selon la revendication 1, **caractérisée en ce que** l'agent de polymérisation est un anhydride, en particulier l'anhydride tétrahydrophtalique (THPA), anhydride hexahydrophthalic (HHPA), anhydride methyltetrahydrophthalic (MTHPA), anhydride methylhexahydrophthalic (MHHPA), anhydride methylnadic (MNA), anhydride dodecenylsuccinic (DBA) ou de leurs mélanges.

6. Composition selon la revendication 1, **caractérisée en ce que** l'agent durcisseur est une amine, en particulier une polyamine, une polyamide, une base de Mannich, une polyaminoimidazoline, une polyétheramine et leurs mélanges.

7. Composition selon la revendication 1, **caractérisée en ce que** le copolymère séquencé polycaprolactone-polysiloxane a la structure suivante : 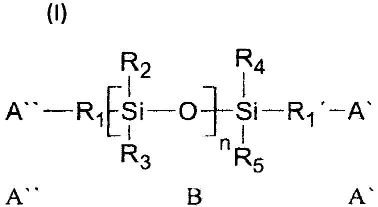
n: nombre entier compris entre 1 et 200, R₂, R₃, R₄, R₅: identiques ou indépendamment choisis parmi les groupes, linéaires ou ramifiés alkyle, alcényle, haloalkyle, halogénoalcényle, ayant jusqu'à 6 atomes de carbone; groupes aryle de 5 à 7 atomes de carbone ou groupes aralkyle de 6 à 8 atomes de carbone.
R₁', R₁: identiques ou indépendamment choisis parmi les alkyléthers ou les alkylamines ayant jusqu'à 7 atomes de carbone.
A "et A': égaux ou indépendants avec 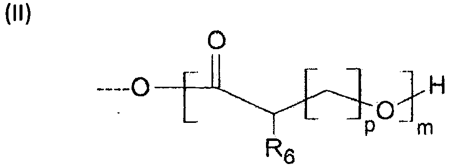 dans laquelle
p: un nombre entier compris entre 1 et 6,
m: un nombre entier compris entre 1 et 25,
R₆: un atome d'hydrogène ou des groupes alkyle linéaires ou ramifiés comportant jusqu'à 6 atomes de carbone.

8. Composition selon la revendication 7, **caractérisée en ce que** le copolymère séquencé polycaprolactone-polysiloxane a la structure: 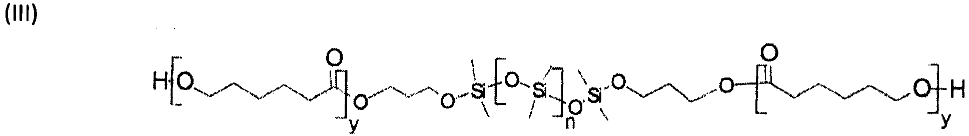 où n ≥ 1 et y > 3.

9. Procédé de préparation d'une composition durcie comprenant les étapes suivantes:
- préparation des composants a) et b) selon la revendication 1
- mélange des composants a) et b) et éventuellement c) selon la revendication 1 à des températures allant jusqu'à 120°C
- éventuellement mise en forme du produit mélangé,
et
- durcissement du mélange à des températures allant jusqu'à 180°C.

10. Composition durcie contenant les composants de la revendication 1 pour la production de résines de moulage, de compositions composites, de revêtements, d'adhésifs et de composés à mouler.
